# EUROPEAN PATENT APPLICATION

(11) **EP 0 899 596 A2**
(43) Date of publication of application: **03.03.1999**
(21) Application number: 98830485.3
(22) Date of filing: 06.08.1998
(51) Int. Cl.: G02B 26/02

(54) **A printed blind system for regulating the passage of light and field of vision**

(30) Priority: 28.08.1997 IT RG970008
(71) Applicant: Cali', Salvatore, 95042 Grammichele (Catania) (IT)
(72) Inventor: Cali', Salvatore, 95042 Grammichele (Catania) (IT)
(74) Representative: Lanzoni, Luciano

(57) **Abstract**

A printed blind system for regulating light radiation and the field of vision, with means for intercepting light radiation comprising at least a first (E1) and a second (E2) element for intercepting light radiation, designed to block or control the passage of light or filter particular light waves, the first (E1) and second (E2) light intercepting elements lying on respective surfaces, parallel or almost parallel with one another, and/or equidistant or almost equidistant. Means (A) are envisaged for moving at least one of the elements for intercepting light radiation (E1 and/or E2) on the surface it lies on and relative to the other element for intercepting light radiation (E1 and/or E2), in such a way that the movement of the elements can be used to regulate the passage of light through the intercepting means.

## Description

The present invention relates to a blind system for regulating the passage of light radiation and visibility. The present system can be applied in various technical fields, in particular, those of construction and furnishing, but can be used in all sectors in which the passage of light and field of vision must be controlled and regulated. In particular, when used in the door and window frames sector, the present blind, hereinafter referred to as a printed blind, can be attached to doors, windows, skylights, indoor and outdoor walls, partitions and screens, glass roofing and facades and any other items imaginable.

The prior art already includes various devices which may be attached to door and window frames, such as: shutters, blinds and curtains of various types and shapes, yet all of these additional structures designed to solve the problems of darkening and privacy require expensive installation, maintenance and periodic cleaning operations, as well as having the disadvantages brought by operating and construction costs.

Moreover, other disadvantages include the weight and size when adapting the product to the construction, and extend to the end of the useful life of the product, at which point the costs (in both economic and ecological terms) of disposing of it as waste must be met. The above-mentioned devices have a further considerable disadvantage, consisting in the waste of excessive energy for their operation, which becomes even more significant when their opening and closing movements are automated. In fact, powerful and expensive electrical and mechanical systems designed for this purpose already exist. In various sectors: construction, furnishing, curtains and blinds, plastic laminates, glass, door and window frames, the need for compact, lightweight devices which regulate light is already felt, devices which can be installed in double glazing, all with a simplified, more compact form than those previously seen. In order to overcome the disadvantages of existing mechanisms, the present invention provides a blind system with the characteristics described in claim 1 or 2 or 3. The subsequent claims refer to particular advantageous embodiments of the present invention. Further characteristics of the invention and its advantages are apparent from the detailed description which follows, with reference to the accompanying drawings which illustrate preferred embodiments of the invention, without limiting the scope of its application, and in which:
- Figures 1a, 1b, 1c are, respectively, a front view, a side view and a top view of a preferred embodiment of the present invention in a first operating condition;
- Figures 2a, 2b are, respectively, a front view and a side view of the same preferred embodiment of the present invention in a second operating condition;
- Figures 3a, 3b are, respectively, a front view and a side view of the same preferred embodiment of the present invention in a third operating condition;
- Figures 4, 5, 6 illustrate a second preferred embodiment of the present invention;
- Figures 7 to 11 illustrate the blind disclosed and the preferred operating mechanisms.

To better understand the concept described above, reference is made to the accompanying drawings, which illustrate an example of the printed blind.

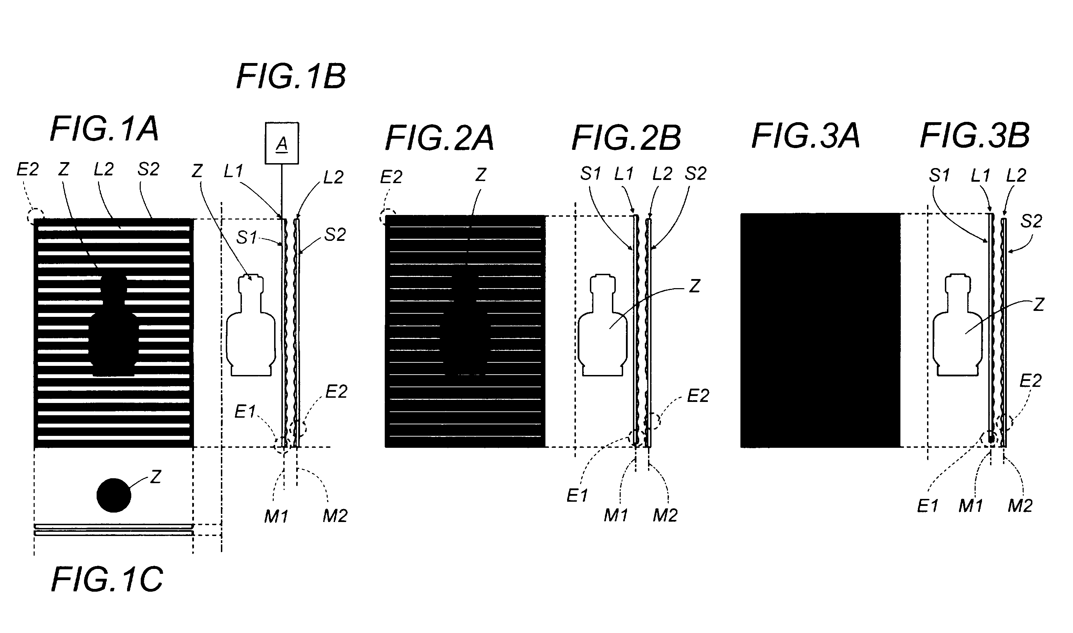

Figures 1a, 1b, 1c illustrate the first preferred embodiment of the printed blind for regulating light radiation and the field of vision. The blind, made using a system in which there are two intercepting elements, has means for intercepting light radiation which comprise a first (E1) and a second (E2) element for intercepting light radiation, which in this case are designed to prevent the passage of light, but which could also be used to reduce or regulate the passage of light and/or visibility and/or filter particular light waves, using said elements, suitably printed and positioned. In particular, according to the embodiment illustrated, the first and second intercepting elements E1 and E2 lie on parallel or equidistant median planes or surfaces (said median surfaces indicated by dashed lines in Figure 1b and labelled with the numerals M1 and M2) and comprise respective light intercepting portions, S1 and S2 which are preferably prints or designs, or in some cases ornamental or geometric motifs. Said intercepting portions may also be obtained by cutting or perforation or even weaving, leaving spaces or gaps in the fabric which define the zones that allow the passage of light or visibility.

In accordance with the present invention, one of the systems for supporting the light intercepting portions S1, S2 envisages that the intercepting portions S1, S2 be used on respective support sheets L1, L2 which are substantially transparent to light radiation, but which could also absorb part of the light intensity or several selected light frequencies.

In Plate 1, the letter Z is used to label an object positioned behind the blind, said object illustrated purely to make the operation of the present invention clearer.

In Figures 1a and 1b the two light intercepting elements are in an operating position in which the light intercepting portions or prints S1 and S2 of the two elements E1 and E2, in this example horizontal stripes, are collimated with one another, allowing the maximum passage of light, since they are aligned with one another in the direction perpendicular to the positioning surfaces.

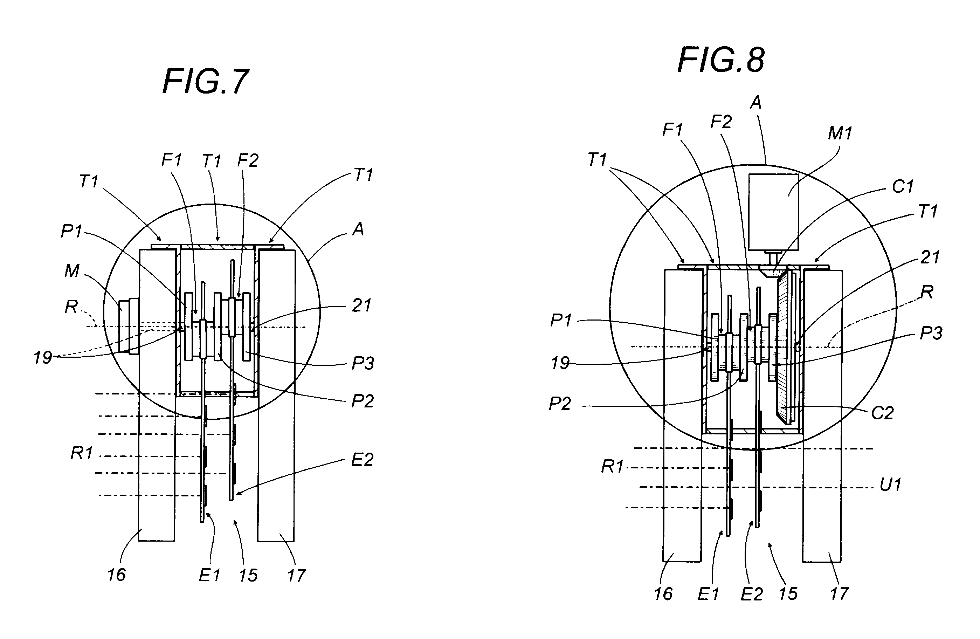

In Figure 1b, the letter A is used to label operating means designed to move the elements E1 and E2 relative to one another. Preferred embodiments for such operating means are illustrated in Figures 7 to 11.

Moreover, as illustrated in Figures 2a, 2b, when the first sheet E1 has moved or slid, in this case upwards, relative to the second sheet E2, which remained immobile, the blind is partially closed and the object (the bottled labelled Z, positioned behind the blind, to make the example clearer) is less visible than in Figure 1a. In Figures 3a, 3b, following the complete sliding, upwards, of the first sheet E1 relative to the sheet E2, which remained immobile, the blind is completely closed and the object behind the blind is no longer visible.

In the present text, the term to print refers to the preparation, in particular, the stamping of portions which intercept light, on a sheet or other support element.

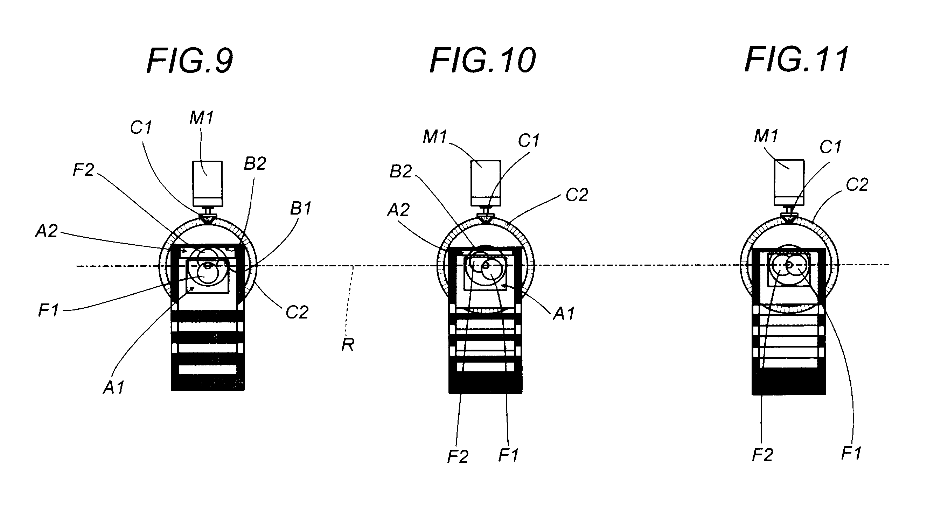

In both the embodiment in Figure 7 and that in Figure 8, the preferred operating mechanism comprises a first support part F1 and a second support part F2 which are inserted in respective openings A1, A2, (in Figure 9) made in the intercepting elements E1 and E2, with respective upper edges B1 and B2 which support the intercepting elements E1 and E2 in such a way that they can slide on the support parts F1 and F2.

Said support parts F1, F2 consist of cylindrical pins, fitted in such a way that they are eccentric relative to an axis of rotation r on opposite sides of the latter.

The cylindrical pins F1 and F2 are separated by an intermediate circular plate P2, designed to separate the two cylindrical pins (or cams) with which they are integral. The pins F1 and F2 are also integral, at their opposite ends, with the same number of circular plates P1 and P3.

As illustrated in Figures 9 to 11, as they rotate relative to the axis R, the eccentric pins F1 and F2 move vertically relative to one another, sliding on the upper horizontal edges B1 and B2 and causing the intercepting elements E1 and E2 to be lowered and raised.

The rotation relative to the axis r can be obtained by means of a rotation knob m (illustrated in Figure 7) or an electric motor M1 (Figure 8) which, by means of a bevel gear or clutch disk C1, at the end of its rotary shaft causes the rotation of a crown gear or clutch plate C2 integral with the plate P3. This cam mechanism has the advantage of opening and closing the blind without inverting the direction of rotation of the knob or motor.

In the embodiments illustrated in Figures 7 to 8, the intercepting elements E1 and E2 are housed in the space or air chamber 15 between two glass panes or sheets 16 and 17. The container frame (T1) is housed between the two opposite glass panes or sheets 16 and 17, the frame housing the projecting ends 19, 21 of the operating mechanism in such a way that they can rotate. In particular, Figures 9, 10 and 11 illustrate a front view of the blind system in the typical completely closed (Figure 9), partially open (Figure 10) and completely open (Figure 11) stages.

The printed blind may, therefore, consist of two or more sheets of material which may be: neutral transparent, coloured transparent, coloured opalescent, opaque or coloured opaque; these sheets may be of any shape, thickness, size, flexibility, type of material (glass, plastic, metal, wood) desired. In these sheets the intercepting portions or elements (S1, S2, Sn), also called prints in the present text, may be stamped or printed using any known stamping or printing method, such as: engraving, lamination, electroerosion or electroplating, chemical processes, silk-screen printing, typography, pad printing, electrochemical processes, spray and brush techniques. The above-mentioned prints may be: coloured transparent, neutral or coloured opalescent, or completely opaque and/or even coloured. The subject represented in the printed portions or prints may have any shape, though the purpose is best served by regular geometric shapes, in particular horizontal or vertical stripes, stamped by opacification or printed on transparent sheets. If the sheets are brought alongside one another, it can be seen that, when the intercepting prints or portions stamped on the sheets coincide or collimate exactly with one another, light passes through the spaces which are not printed. However, if the sheets are slid over one another in such a way that the stamped or printed part of one sheet covers the unstamped part of the other sheet or sheets, the non-printed spaces are all covered. If opaque materials are used for the prints, the passage of light and vision are completely blocked. In contrast, if coloured transparent or opalescent paints are used for the print, an excellent chromatic effect is obtained.

A gradual adjustment of the blind is also possible. Moreover, the present solution, with suitably calibrated prints and movements, allows perfect closing and completely blocks the passage of light, allowing total darkening of indoor spaces even during the daytime. The sliding of the sheets of which the printed blind is comprised is mechanical and may be manoeuvred manually, motor-driven and/or automated, using known drive techniques and taking advantage of the low power absorbed for its movements. This new mechanism, the "printed blind", provides many advantages. First, the entire solution allows the elimination of installation of other unsightly additional structures and mechanisms, thus saving space and money. Maintenance is also significantly reduced, since, if the printed blind is used in double glazing systems, all maintenance relative to cleaning, size or other factors can be avoided. In addition, very little energy is required to operate the blind.

The present blind can easily be powered using a small battery placed in a special housing near the blind. This particular advantage (low consumption) is a further advantage if the blind is to be automated, since the level of light which enters the room can be regulated using a simple remote control or even a preset program. The printed blind is easy to make and can be installed rapidly, since it can be made in the form of a kit to facilitate distribution and installation in those sectors in which the system is desired. The materials used to make the blind are compact and inexpensive. For those blinds made of easily rolled printed films or sheets, an additional advantage is ease of transportation. For this example of printed blinds, made using films, one great advantage is that at the end of its useful life it is very cheap to dispose of as waste, since its weight and substance is negligible (there are just a few grams of product to dispose of).

The advantages of the printed blind include the fact that it does not have to be oriented in space, but simply moved, that is to say, translated in space parallel with the surfaces on which it lies, and so does not occupy any additional volume in terms of thickness for its movements.

Moreover, it can be adapted to all places which require elements that are elegant, simple and practical (for example, offices, hospitals, hotels, attics, private homes, large buildings with glass walls, museums and any other place imaginable).

Another great advantage is the speed at which the present blind passes from the completely closed position to the completely open position, with the possibility of stopping at any intermediate point. To provide details of the present printed blind, the above description refers to two or more sheets (or layers). It should be noticed, firstly, that the thickness of these sheets may range from a film just a few microns thick to several centimetres. For example, a blind may be made using a printed pane of glass, which may even be reinforced, 20 or 30 mm thick as sheet E1, and, again by way of example, a sheet made of methacrylate or other material, just a few microns thick, as sheet E2. A further embodiment of the printed blind envisages the use of two first and second sheets with prints or intercepting portions on the sheets that occupy 50% of the total space on the sheets. In this case, in an example in which a print is used, on each sheet, where the print motif represents a series of horizontal portions or lines 5 mm wide and as long as the total length of the sheets, and leaving a non-printed space of 5 mm between one horizontal line and the next, and overlapping the two sheets in question, so that the design on the first sheet coincides perfectly with the design on the second, 50% of the total light passes through the blind, since the other 50% is blocked by the lines on the two sheets, which overlap one another in this position. If the two sheets are slid over one another, in this case vertically, so that the horizontal lines on the first sheet move towards and cover the gaps on the second sheet, and vice versa the lines on the second sheet move towards the gaps on the first sheet, the passage of light through the blind is gradually reduced until the 5 mm lines on the first sheet cover the 5 mm gaps on the second sheet and vice versa the 5 mm lines on the second sheet cover the 5 mm gaps on the first sheet. In this way, all of the gaps (non-printed) are covered until the passage of light is completely blocked.
- It is understood that, in this example at least one of the two sheets is mobile.
- All translation or sliding movements of the sheets on the blind may be in any direction, provided they comply with the print motifs and are basically aimed at achieving the result of regulating the passage of light and visibility.
- It is also understood that, having referred to total darkness and light reduced by 50%, for this example, it is evident that in this case paint or other substances completely opaque to the passage of light have been used for the prints, whilst materials completely transparent to the passage of light were used for the blind support sheets. It is also evident that the example does not take into account the reductions in the passage of light that are intrinsic to the type of material used for the sheets.
- It is understood that, in the above-mentioned example, having referred to 5 mm thick prints with horizontal line motifs, the print and measurement is given by way of example only, to clarify the example. Moreover, in order to be sure that total darkness will be achieved, the width of the printed lines should be increased relative to the non-printed gaps, so that, when the lines on the first sheet move in front of the gaps on the second sheet and vice versa, the edges of the prints or intercepting portions overlap, guaranteeing that no light can filter through due to small print and/or positioning imprecisions. This specification, which creates the small disadvantage of reducing the range of operation between the open blind and closed blind positions, has the advantage of guaranteeing absolute darkness when the blind is completely closed. However, this remains a construction choice; a blind which, in its fully closed position, does not give total darkness may even be required.
- It is understood that, the dimensions, substance and quality, as well as the transparency, thickness, flexibility, shape and curvature of the surfaces, weight, colour, print motif and the range of regulation and all other factors imaginable, in terms of materials and construction forms of the present blind, may be selected to suit the requirements of the individual cases.

The present printed blind system allows the reduction or regulation of the light and field of vision by the relative movement, in particular sliding, of two or more intercepting sheets or elements containing prints with various shapes and motifs, the prints and sheets having varying opaqueness.

Thanks to the present printed blind, with the minimum movement (in this case 5 mm) of a sheet made even of a film weighing no more than a few grams, it is, therefore, possible to obtain an excellent, sought-after result with an extremely small amount of energy and at high speed (since the distance covered for its movement is so short).

A further embodiment of the printed blind envisages the use of three sheets, one first sheet, one second and one third, with identical prints on all of the sheets, occupying approximately 33.3% of the total space on the sheets, or slightly more than 33.3%, so as to be certain that the completely closed blind provides total darkness.

All references to the previous example also apply in this case, the only difference between the three-sheet system and the two-sheet system being that the final result is a wider range of regulation, which goes from the completely open blind with a 33.3% reduction in the passage of light, to the completely closed blind with 100% blocking of the passage of light. Thus the range of regulation passes from approximately 50% with the two-sheet system to approximately 66.6% with the three-sheet system. Obviously, the ranges of regulation indicated are the maximum values obtainable and more limited values are possible, depending on the print motifs and sliding stroke. As regards the drive system, the three sheets in the latter example may all be mobile, or one may be fixed and the other two mobile. It is important that, starting from a position in which the three sheets perfectly overlap one another and the three prints are perfectly collimated, with an initial passage of light equalling approximately 33.3%, as the sheets gradually begin to slide over one another, in the same way as in the example with two sheets, the printed horizontal lines each move into a position in which they cover part of the empty space on the other two sheets. In this way, upon completion of the controlled sliding, the passage of light is completely blocked, after the sheets have passed through numerous intermediate positions or states, in which they can be stopped.

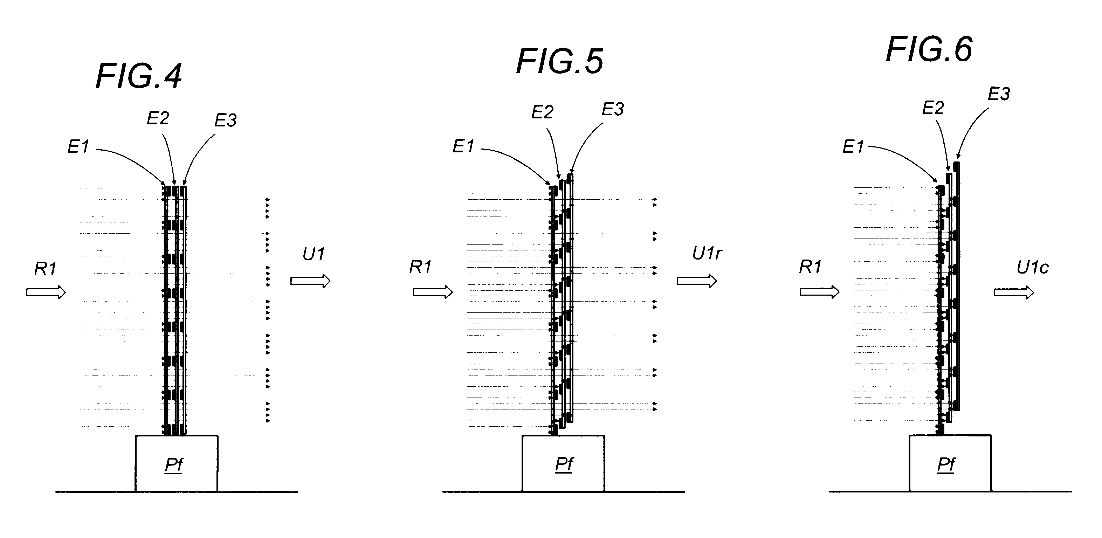

To better illustrate the above-mentioned description, Figures 4, 5, 6 show how a printed blind can be made using three sheets, the three Figures 4, 5, 6 illustrating three different operating states for the blind. In Figure 4, with the blind in the open state, the first sheet E1, second sheet E2 and third sheet E3 rest on a fixed base (PF), allowing the passage of light in accordance with arrow R1, the result being light exiting U1 as illustrated in the figure. In Figure 5, after sheets E2 and E3 have slid, in this case upwards, relative to sheet E1, which in this example remains in a fixed position resting on the base, the blind is partially closed and with the same light entering R1 there is less light exiting (U1R) compared to the result in Figure 4. In Figure 6, after sheets E2 and E3 have slid completely, again upwards, relative to sheet E1, which in this case remains in a fixed position resting on the base, the blind is completely closed and the light entering (R1) is completely blocked, so that the light exiting (U1C) is reduced to zero (no rays passing through the blind). Obviously, in the range between the state in Figure 4 and the state in Figure 6, there is not only the state in Figure 5, but numerous other states or positions. Further embodiments, using more sheets are also conceivable for the present invention. In particular, the more sheets are used, the better the range of regulation becomes, or the total space available for the passage of light, simultaneously raising production costs and improving product quality. For example, with a five-sheet system a range of regulation with 80% maximum margin could be obtained, whilst a ten-sheet system would be required to obtain a 90% regulation margin. As described in the examples, if, instead of using opaque coloured paints or other substances for the prints, transparent or semi-transparent coloured paints or substances were used, with transparent or semi-transparent sheets in various colours for the supports, the result would be lighting effects given by the overlapping of the colours on the sheets and in the print motifs. The advantages of this are artistic and ornamental and, in this case, would extend the scope for application of the present printed blind. The individual support sheets (L1, L2) on the present invention are, therefore, preferably made of a sheet of material that is neutral transparent, coloured transparent, polished opalescent, coloured opalescent, coloured opaque, rigid or flexible, with a shape that may be irregular and flat or curved surfaces, with thickness, colour, raw material, degree of transparency and size which may be selected from the vast range of existing materials, the basic function being to support the prints which constitute the blind. The present blind operates with a minimum of two printed portions (preferably identical), each of which is attached to a relative sheet, the printed portions created using any suitable system. Some examples are: silk-screen printing, pad printing, photography and photomechanics, offset for special supports, laser prints, ink jet plotter prints, ink jet printer prints, printing by chemical or electrical erosion systems, printing by electroplating systems, photoengraving, and others. In some cases, use of the support sheets can be avoided, when the intercepting portions are obtained by cutting sheets made of metal, wood or other materials. When textiles are used, especially fabrics and cloths, spaces can be left in the weave of the fabric, separated by woven sections, defining the intercepting portions, to obtain a further embodiment of the present blind. The result is a blind consisting of at least two suitably printed intercepting sheets or elements, positioned in such a way that they can slide over one another. The motif or design stamped on the individual sheet is such that it matches one or more designs, which may be identical or different to the first, so that the final result obtained when they are overlapped, is the opening or closing, by sliding, of the passage of light and field of vision. The printed sheets, or the prints only in the case of the present blind, for regulating the passage of light and field of vision, preferably move in such a way that one or more or all of the sheets simultaneously slide over one another, in different or identical directions and at different or identical speeds and at varying distances from one another, considering that, the closer they are, the more precise the regulation becomes. In the present text, the term opalescent indicates all materials which allow the partial passage of light but not visibility; that is to say, through which images cannot be seen.

Thus a blind has been perfected for regulating the passage of light and field of vision using the method involving the sliding of two or more sheets made of a material that is neutral transparent, coloured transparent, neutral opalescent, coloured opalescent, opaque or coloured opaque, of any size, shape, thickness, printed with prints that are coloured transparent, neutral opalescent, coloured opalescent, opaque and coloured opaque, using any conventional printing or stamping method known to experts in the trade. These methods include laser, electric, chemical, laminating printing, and the print or filling subjects or motifs may have any geometric or ornamental shape and, again, any size, but must be designed in such a way that when they are overlapped and slide relative to one another, they have the optical effect of regulating the passage of light and/or field of vision, with their successive passages covering the non-printed gaps on the sheets, each covering the missing areas of the others (the missing areas being the parts of the sheets not covered by print). The extent of the sliding movements will be determined by the motif or motifs printed on the sheets and by the desired result. For the present blind two, three, four or more printed sheets can be used. Thus, the use of sheets made of materials that are neutral transparent, coloured transparent, opalescent, coloured opalescent, coloured opaque is envisaged. For the prints on the sheets, colours or systems which give a neutral transparent, coloured transparent, opalescent and/or coloured opalescent result may be used. Colours or systems which give a coloured opaque result can also be used for the prints on the sheets. Printing on the sheet can be carried out using methods such as engraving, lamination, electroerosion or electroplating, chemical, silk-screen printing, typography, pad printing or rotary pad printing, electro-chemical, spraying, brushing, laser printing, ink jet, milling, cutting, bush-hammering, grinding and sand-blasting may be used. The sheets may be printed with print motifs with geometric, ornamental shapes, photographs, screens, without limitations as to the subject or shape of the print, nor the extent of sliding by the printed sheets. The printed sheets may also be moved in any direction, although vertical, horizontal or circular motion, with any point on the printed sheets as the centre, is preferable.

The preferred use of the present blind is in the technical fields of building construction and furnishing, but it may also be applied to double glazing for doors and windows of any kind, for outdoor and indoor use, for skylights or on partitions and screens for outdoor and indoor use, and on glass walls for outdoor and indoor use. The printed blind may also be applied in plastic laminates or panes of glass attached to plastic laminates, for use on glass walls for outdoor and indoor use, on glass roofing and outdoor glass facades.

The printed blind may be used in the automobile sector or transport in general, even aeronautical and maritime, on windows, internal partitions, for covering headlights, doors and windows on caravans, campers, buses and other vehicles. It can be used to regulate and protect against light radiation on photovoltaic cells and similar, and it can be used in the watch-making sector, making micro-blinds (with tiny prints or screens) for the faces of clocks and watches, for special jewels.

The raw material for construction of the blind may be flexible and rigid films, made of plastic and other materials, adhesive and non-adhesive, coloured and colourless, with the possibility of laminating one of the sheets (adhesive) on an existing support of any type, preferably transparent.

The blind may also be constructed using suitably woven fabrics, in particular those used to make curtains or clothing. According to a special embodiment, it is possible to make a type of blind comprising two or more panels with strips obtained by cutting or strips assembled in such a way as to create a motif on each panel or sheet with which to obtain the desired optical effect by sliding of these sheets.

In the furniture sector, the present blind may be used to conceal the content of glass-fronted cupboards or behind the glass-doors of some items of furniture. The blind may also be made using thick or thin sheets or pieces of metal in which suitable holes have been made by moulding, electron discharge machining or other systems, or by the assembly of pre-packed sheet metal sections. It can also be used in greenhouses, to regulate the solar radiation entering the greenhouse, using printed films or other suitable material. Construction of the present blind may envisage the use, as the support sheet and/or print, of paper, cellophane, cardboard and its derivatives, suitably printed or cut. The blind may be used as a daytime window covering, with two, three or more sheets or layers. In particular, with the present invention, as already indicated, the movement between the relative sheets occurs with the sheets remaining distanced from one another, or sliding in contact with one another.

## Claims

1. A blind system for regulating the passage of light radiation and the field of vision, characterised in that it comprises at least a first (E1) and a second (E2) element for intercepting light radiation, said elements being designed to block or reduce the intensity of the light or filter particular light waves; said first (E1) and second (E2) elements for intercepting light radiation lying on respective surfaces, being substantially parallel with one another or equidistant; there being means for moving at least one of the elements for intercepting light radiation (E1 and/or E2) substantially along the respective surface and relative to the other element for intercepting light radiation (E1 and/or E2) in such a way that the movement of said elements can be used to regulate the passage of light through the intercepting elements (E1, E2).

2. The blind system according to claim 1, characterised in that the first and second intercepting elements (E1, E2) each comprise at least one portion (S1, S2) for intercepting the light, being designed to block or reduce the intensity of the light or filter particular light waves and corresponding support means (L1, L2) for the intercepting portions (S1, S2).

3. The blind system according to any of the foregoing claims, characterised in that the support means (L1, L2) for the intercepting portions (S1, S2) comprise, for each intercepting element (E1, E2), a respective sheet (L1, L2), the intercepting portions (S1, S2) being stamped or printed on the latter.

4. The blind system according to any of the foregoing claims, characterised in that the intercepting elements (E1, E2) are flat elements.

5. The blind system according to any of the foregoing claims from 1 to 3, characterised in that the intercepting elements (E1, E2) are curved elements.

6. The blind system according to any of the foregoing claims, characterised in that the portions for intercepting light on each of the intercepting elements (E1, E2) are stripes (S1, S2), said stripes being at a distance from and parallel with one another.

7. The blind system according to claim 6, characterised in that the portions for intercepting light in the form of parallel stripes (S1, S2) extend horizontally or vertically.

8. The blind system according to any of the foregoing claims, characterised in that the intercepting elements (E1, E2) are mobile, being able to translate in a vertical or horizontal direction parallel with the elements (E1, E2).

9. The blind system according to any of the foregoing claims, characterised in that the intercepting elements (E1, E2) slide over one another.

10. The blind system according to any of the foregoing claims, characterised in that it consists of three elements for intercepting light radiation (E1, E2, E3).

11. The blind system according to any of the foregoing claims, characterised in that the means which move the elements for intercepting light radiation (E1, E2) relative to one another, comprise for each intercepting element (E1, E2) at least one support part (F1, F2); at least one of the support parts (F1, F2) rotating about an axis R transversal to the positioning planes of the intercepting elements (E1, E2), moving said intercepting elements (E1, E2) relative to one another.

12. The blind system according to claim 11, characterised in that the support parts (F1, F2) for the intercepting elements (E1, E2) are cylindrical pins, being mounted in such a way that they are eccentric relative to the axis of rotation (R), said eccentric pins (F1, F2) being caused to rotate about the axis of rotation (R) so as to cause the translation of the intercepting elements (E1, E2) relative to one another.

13. The blind system according to any of the foregoing claims, characterised in that the elements (E1, E2) consist of support sheets (L1, L2), being made of transparent material or films, upon which the portions for intercepting light radiation (S1, S2) are printed.

14. An double glazing unit comprising at least a first and a second pane of glass (16) and (17) and an internal chamber (15) between the panes of glass (16, 17), characterised in that, inside the chamber (15), it comprises a blind system according to any of the foregoing claims.
